# EUROPEAN PATENT APPLICATION

(11) **EP 4 343 528 A1**
(43) Date of publication of application: **27.03.2024**
(21) Application number: 22855437.4
(22) Date of filing: 09.08.2022
(51) Int. Cl.: G06F 3/06

(54) **DATA SENDING METHOD, NETWORK CARD AND COMPUTING DEVICE**

(30) Priority: 09.08.2021 CN 202110910507
(71) Applicant: Huawei Technologies Co., Ltd., Shenzhen, Guangdong 518129 (CN)
(72) Inventor: CHEN, Xiaoyu, Shenzhen, Guangdong 518129 (CN)
(74) Representative: Körber, Martin Hans
(86) International application number: PCT/CN2022/111169
(87) International publication number: WO 2023/016456

(57) **Abstract**

In a data sending technology, a network interface card splits obtained data and an obtained address, generates a plurality of pairs of data and addresses, assembles the plurality of pairs of data and addresses to generate a plurality of write requests, places the plurality of write requests into a plurality of QPs, and then sends the write requests to a plurality of storage nodes for storage via a network. According to the method, a corresponding function is offloaded from a CPU to the network interface card, to effectively reduce a CPU scheduling latency and improve data transmission efficiency in an EC scenario, a multi-copy scenario, and the like.

## Description

This application claims priority to Chinese Patent Application No. 202110910507.0, filed with the China National Intellectual Property Administration on August 9, 2021 and entitled "DATA SENDING METHOD, NETWORK INTERFACE CARD, AND COMPUTING DEVICE", which is incorporated herein by reference in its entirety.

### TECHNICAL FIELD

This application relates to the field of storage technologies, and in particular, to a data sending method, a network interface card, and a computing device.

### BACKGROUND

To ensure data reliability in a storage system, data redundancy is usually implemented by using an EC check mechanism or a multi-copy mechanism. To be specific, data is stored in a plurality of storage nodes, and when some of the nodes are faulty, reliability and availability of the data can still be ensured. To implement a multi-copy solution or an EC solution, a computing node that delivers an IO write request needs to prepare required data and required context information (for example, a write address) for a plurality of copies or slices, assemble the data and the context information into a plurality of groups of data and context information and send the plurality of groups of data and context information to a network interface card to generate a plurality of work requests, place the plurality of work requests into corresponding send queues, and send the work requests to the plurality of storage nodes for storage. Because processes of performing assembling to generate the work requests and placing the work requests into the queues are sequentially performed at an operating system layer, a larger quantity of slices or copies indicates higher latency overheads in the foregoing processes. Especially, in a small IO (for example, 64 B) scenario, a proportion of latencies in the foregoing processes is larger.

### SUMMARY

This application provides a data sending method, a network interface card, and a computing device, to effectively reduce data sending latencies in an EC scenario and a multi-copy scenario.

According to a first aspect, an embodiment of this application provides a data sending method. The method is applied to a network interface card. First, the network interface card obtains first data and a first address; then generates P write requests based on the first data and the first address, where each of the P write requests carries to-be-written data and a corresponding write address, and P is a positive integer greater than 2; then places the P write requests into P send queues QPs, where the P write requests are in one-to-one correspondence with the P QPs; and finally, sends the P write requests to P storage nodes based on the P QPs, where the write addresses in the P write requests are in one-to-one correspondence with the P storage nodes.

In this method, a data sending function originally executed by a CPU is offloaded to a network interface card for parallel execution, and a data sending procedure is changed. Specifically, the network interface card may simultaneously generate a plurality of write requests based on the obtained first data and the obtained first address, and place the requests into a plurality of send queues. Because the plurality of send queues may be executed in parallel, a data sending latency (for example, in an EC scenario or a multi-copy scenario) can be effectively reduced. In addition, offloading the function originally executed by the CPU to the network interface card can reduce CPU resource occupation. Further, the network interface card has a data sending function. Therefore, offloading the data sending function to the network interface card (instead of other hardware) can improve data sending efficiency.

In a possible design manner, the first data is copied to obtain P pieces of to-be-written data; or the first data is split into P pieces of to-be-written data, where the P pieces of to-be-written data are P pieces of identical data. In a multi-copy scenario, splitting or copying multi-copy data by a dedicated processor of the network interface card can effectively reduce a processing latency.

In a possible design manner, the first data is split into P pieces of to-be-written data, where the P pieces of to-be-written data include n data slices and m check slices corresponding to the n data slices, m and n are positive integers, and P=n+m. In an EC scenario, splitting data by a dedicated processor of the network interface card can effectively reduce a processing latency.

In a possible design manner, the first address is split into P write addresses, where the first address represents a segment of storage space, and each of the P write addresses is corresponding to a segment of storage space on one of the P storage nodes. The P pieces of to-be-written data and the P write addresses are assembled into the P write requests, where each write request carries one of the P pieces of to-be-written data and one of the corresponding P write addresses. In this method, an address of the network interface card is split, and the address and data are assembled into a plurality of write requests, so that a processing latency can be effectively reduced.

In a possible design manner, the network interface card obtains the first data and the first address from a processor of a host, where the network interface card is located in the host; or the network interface card directly obtains the first data and the first address from a memory of a host.

In a possible design manner, the write request is an RDMA write request, and the P write addresses are respectively corresponding to memory storage space of all of the P storage nodes. When being used in a memory EC scenario or a memory multi-copy scenario, this method can reduce an end-to-end latency more greatly.

According to a second aspect, an embodiment of this application further provides a data sending apparatus. The apparatus is used in a network interface card, and the apparatus includes:
an obtaining module, configured to obtain first data and a first address;
a processing module, configured to generate P write requests based on the first data and the first address, where each of the P write requests carries to-be-written data and a corresponding write address, and P is a positive integer greater than 2, where the processing module is further configured to place the P write requests into P send queues QPs, where the P write requests are in one-to-one correspondence with the P QPs; and
a sending module, configured to send the P write requests to P storage nodes based on the P QPs, where the write addresses in the P write requests are in one-to-one correspondence with the P storage nodes.

In a possible design manner, the processing module is further configured to: copy the first data to obtain P pieces of to-be-written data; or split the first data into P pieces of to-be-written data, where the P pieces of to-be-written data are P pieces of identical data.

In a possible design manner, the processing module is further configured to split the first data into P pieces of to-be-written data, where the P pieces of to-be-written data include n data slices and m check slices corresponding to the n data slices, m and n are positive integers, and P=n+m.

In a possible design manner, the processing module is further configured to: split the first address into P write addresses, where the first address represents a segment of storage space, and each of the P write addresses is corresponding to a segment of storage space on one of the P storage nodes; and assemble the P pieces of to-be-written data and the P write addresses into the P write requests, where each write request carries one of the P pieces of to-be-written data and one of the corresponding P write addresses.

In a possible design manner, the obtaining module is further configured to: obtain the first data and the first address from a processor of a host, where the network interface card is located in the host; or directly obtain the first data and the first address from a memory of a host.

In a possible design manner, the write request is an RDMA write request, and the P write addresses are respectively corresponding to memory storage space of all of the P storage nodes.

According to a third aspect, an embodiment of this application further provides a network interface card. The network interface card includes a processor and a storage device, where the storage device stores computer instructions, and the processor executes the computer instructions to perform the method in any one of the first aspect or the possible design manners of the first aspect.

According to a fourth aspect, an embodiment of this application further provides a computing device. The computing device includes a network interface card and a processor, where the processor is configured to generate first data and a first address, and the network interface card is configured to perform the method in any one of the first aspect or the possible design manners of the first aspect.

According to a fifth aspect, an embodiment of this application further provides a computer storage medium, where the computer storage medium stores a computer program, and when the computer program is run on a computer, the computer is enabled to implement the method in any one of the first aspect or the possible design manners of the first aspect.

### BRIEF DESCRIPTION OF DRAWINGS

FIG. 1 is an architectural diagram of a distributed storage system according to an embodiment of this application;
FIG. 2 shows a storage network architecture including a memory pool according to an embodiment of this application;
FIG. 3 is a schematic flowchart of a data sending method according to an embodiment of this application;
FIG. 4 is a schematic diagram of a splitting and assembling method according to an embodiment of this application;
FIG. 5 is a schematic diagram of a data sending method in a three-copy scenario according to an embodiment of this application;
FIG. 6 is a schematic diagram of a data sending method in an EC 2+2 scenario according to an embodiment of this application; and
FIG. 7 is a schematic diagram of a data sending apparatus according to an embodiment of this application.

### DESCRIPTION OF EMBODIMENTS

For ease of understanding embodiments of this application, some terms used in this application are explained and described first.

Multi-copy is a data redundancy protection mechanism. The multi-copy is that one piece of data is copied and data copies are written into a plurality of nodes in a storage system, to ensure strong data consistency between the plurality of data copies. In this way, a fault of a single node does not affect a service, and the data can be read from another copy that is not faulty, to ensure service reliability.

EC (Erasure Code) is an erasure coding technology, and is also a data redundancy protection mechanism. The EC means that m pieces of data are added to n pieces of original data, and any n pieces of data in n+m pieces of data can be used to restore the original data. If the n+m pieces of data are distributed on different nodes of the storage system, when any m or fewer nodes are faulty (m pieces of data are invalid), the other remaining data can be used to restore the original data. In this way, the service is not affected.

Remote direct memory access (remote direct memory access, RDMA): The RDMA is a direct memory access technology in which a system kernel can be operated without using a remote application server, so that a computing device directly reads and writes data in a memory of another computing device, and the data does not need to be processed by a processor in this process. This not only saves a large quantity of CPU resources, but also improves a system throughput and reduces a network communication latency of a system.

Queue (queue): The RDMA supports a total of three queues: a send queue (send queue, SQ), a receive queue (receive queue, RQ), and a complete queue (complete queue, CQ). The SQ and the RQ are usually created in pairs, and are referred to as a queue pair (queue pair, QP). The RDMA is a message-based transmission protocol, and data transmission is an asynchronous operation. An operation process of the RDMA is as follows.
(1) A processor of a host (host) submits a work request (work request, WR) to a network interface card, and the network interface card configures the work request to a work queue (work queue, WQ), where the work queue includes the send queue (SQ) and the receive queue (RQ). Each element in the work queue is referred to as a work queue element (work queue element, WQE), and one element corresponds to one WR.
(2) The processor of the host may obtain a work complete (work complete, WC) from the complete queue (CQ) via the network interface card. Each element in the complete queue is referred to as a complete queue element (complete queue element, CQE), and one element corresponds to one WC.

Hardware (hardware) with an RDMA engine, for example, the network interface card, may be considered as a queue element processing module. The hardware continuously obtains the work request (WR) from the work queue (WQ) for execution, and after completing the execution, the hardware places the work complete (WC) in the complete queue (CQ).

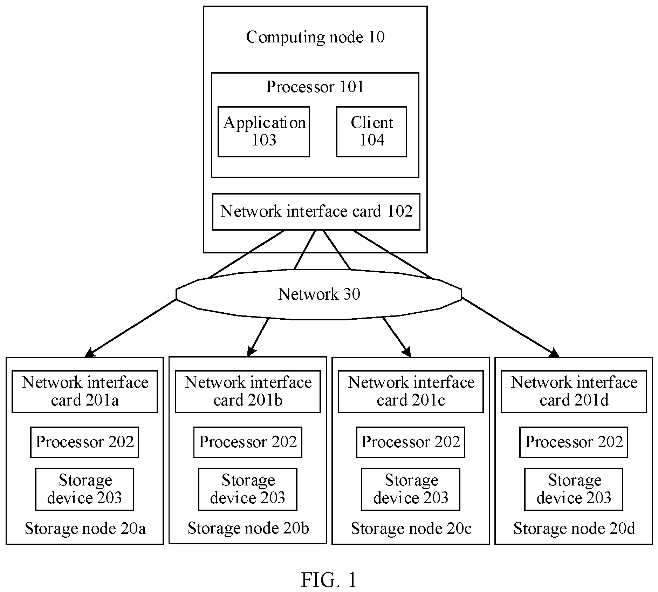

FIG. 1 is an architectural diagram of a distributed storage system according to an embodiment of this application. The storage system includes a cluster including a plurality of computing nodes and a cluster including a plurality of storage nodes. Any computing node 10 in the computing node cluster may access any storage node 20 in the storage node cluster via a network 30.

The network 30 implements data transmission and communication by using one or a combination of the following protocols, for example, a transmission control protocol/an internet protocol (Transmission Control Protocol/Internet Protocol, TCP/IP), a user datagram protocol (user datagram protocol, UDP), another type of protocol, and a network protocol that supports a remote direct memory access (remote direct memory access, RDMA) technology, for example, an InfiniBand (InfiniBand, IB) protocol, an RDMA over converged ethernet (RDMA over Converged Ethernet, RoCE) protocol, and an internet wide area RDMA protocol (internet Wide Area RDMA Protocol, iWARP). In a specific implementation process, one or more switches and/or routers may be used to implement communication processing between a plurality of nodes.

The computing node cluster includes one or more computing nodes 10 (where only one computing node 10 is shown in FIG. 1). At a hardware layer, a processor 101 (for example, a central processing unit (central processing unit, CPU)), a network interface card 102, and a storage device (not shown in FIG. 1) are disposed in the computing node 10. At a software layer, an application program (application program) 103 (application for short) and a client program 104 (client for short) are run on the computing node 10, where 103 and 104 may be run in the processor 101. The application 103 is a general term of various application programs presented to a user. The client 104 is configured to: receive a data access request triggered by the application 101, and interact with the storage node 20, so that the computing node can access a distributed storage resource or receive data from the storage node. The client 104 may be implemented by a hardware component or a software program located inside the computing node 10. For example, the client 104 may be a Plog (Persistence Log, persistence log) client or a VBS (Virtual Block System, virtual block system) management component.

The storage node cluster includes one or more storage nodes 20 (where three storage nodes 20 are shown in FIG. 1, and are respectively 20a, 20b, and 20c, but are not limited to the three storage nodes 20), and all of the storage nodes 20 may be interconnected. The storage node 20 may be a device like a server, a controller of a desktop computer or a storage array, or a hard disk enclosure. In terms of a function, the storage node 20 is mainly configured to perform storage processing, computing processing, or the like on data. In terms of hardware, as shown in FIG. 1, the storage node 20 includes at least a network interface card 201, a processor 202 (for example, a CPU), and a storage device 203. The network interface card 201 is configured to perform data communication with the computing node 10 or another storage node, and the processor 202 is configured to process data from the outside of the storage node 20 or data generated inside the storage node 20. The storage device 203 is an apparatus configured to store data, and may be a memory or a hard disk/disk. In addition, the storage node cluster further includes a management node (not shown in FIG. 1), configured to create and manage a memory pool or a storage pool, which is collectively referred to as a resource pool below. Optionally, the management node may alternatively be a storage node 20 or a computing node 10.

Optionally, at the software layer, a server program (not shown in the figure) is run on the storage node 20, and may be configured to interact with the computing node 10, for example, receive data sent by the computing node 10 via the client 104.

To ensure reliability of data storage, in the storage system in FIG. 1, data redundancy in the storage pool is usually implemented by using an EC check mechanism or a multi-copy mechanism. For example, in an existing block storage system, a same piece of data may be copied to obtain two or three copies for storage. For each volume in the system, data is sliced based on 1 MB by default, and sliced data is stored in a plurality of disks on a storage cluster node or in disks on a plurality of storage nodes 20 based on a DHT (Distributed Hash Table, distributed hash table) algorithm. For another example, an EC-based block storage system is established on the basis of distribution and inter-node redundancy. When entering the system, data is split into N data strips first. Then, M redundant data strips are obtained through calculation. Finally, the data is stored in N+M different nodes. Data in a same strip is stored in different nodes. Therefore, data in block storage can be restored when a disk is faulty and can also be restored when a node is faulty, to avoid a data loss. The system can continuously provide a service, provided that a quantity of nodes that are simultaneously faulty in the system does not exceed M. In a process of data reconstruction, the system can restore damaged data and recover data reliability of the entire system.

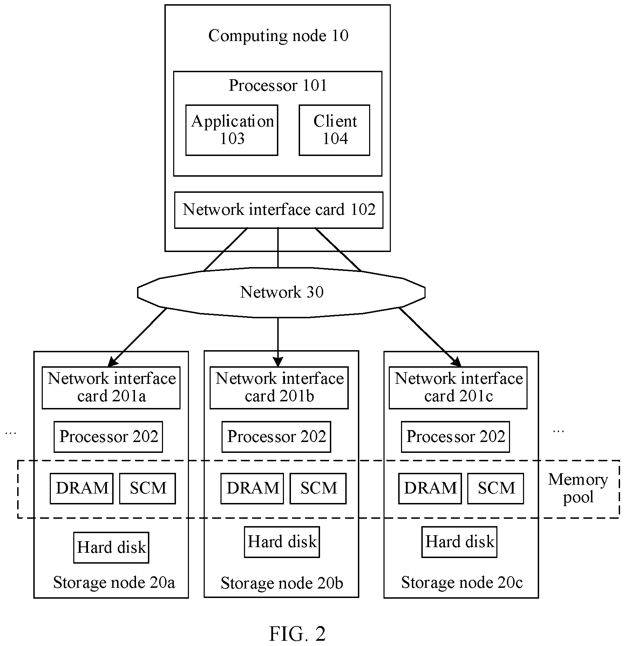

In embodiments of this application, the network interface card 102 and the network interface card 201 in FIG. 1 and FIG. 2 (in the following) may support the RDMA technology, and support a network port of a user-defined or standard RDMA protocol, for example, at least one of the IB protocol, the RoCE protocol, and the iWAPP. For example, network interface cards of the node 10 and the node 20 may implement an RDMA request based on the network 30, and send the foregoing RDMA data access request (for example, an IO write request) to a plurality of nodes in the storage node cluster. After receiving data, each storage node directly writes the data into the storage device for storage, without occupying a processor resource of a host, to improve write performance of the storage node.

FIG. 2 shows a storage network architecture including a memory pool according to this application, and further provides the memory pool mentioned in the storage system in FIG. 1. A memory is a storage device that directly exchanges data with a processor. For example, the memory may be a random access memory or a read-only memory. For example, the random access memory may be a dynamic random access memory (Dynamic Random Access Memory, DRAM) or a storage class memory (Storage Class Memory, SCM). The DRAM is a semiconductor memory. Similar to most random access memories (Random Access Memories, RAMs), the DRAM is a volatile memory (volatile memory) device. The SCM is a composite storage technology that combines features of both a conventional storage apparatus and the storage device. The storage class memory can provide a faster read/write speed than a hard disk and a slower access speed than the DRAM, and is cheaper than the DRAM in terms of costs. However, the DRAM and the SCM are merely examples for description in this embodiment, and the memory may further include another random access memory.

The memory pool may include a storage device 203 (for example, the foregoing DRAM, SCM, or hard disk) in each storage node 20. The memory pool shown in FIG. 2 may include only storage devices with high performance, for example, the DRAM and the SCM, and exclude a memory with low performance, for example, the hard disk. Optionally, the memory pool also includes any type of storage device in the storage node. In product practice, a plurality of different types of storage devices may be deployed inside the storage node 20, in other words, various types of memories or hard disks may all become a part of the memory pool, and storage devices of a same type that are located in different storage nodes belong to a same layer in the memory pool. This application does not impose any limitation on the type of the storage device included in the memory pool and a quantity of layers.

A management node centralizes storage space provided by each storage node cluster 20, and uses centralized storage space as the memory pool for unified management. Therefore, physical space of the memory pool is from various storage devices included in each storage node. The management node needs to perform unified addressing on the storage space added to the memory pool. Through unified addressing, each segment of space of the memory pool has a unique global address. Space indicated by the global address is unique in the memory pool, and each storage node 20 knows a meaning of the address. After physical space is allocated to a segment of space of the memory pool, a global address of the space has a corresponding physical address. The physical address indicates a storage device of a storage node where the space represented by the global address is actually located and an offset of the space in the storage device, that is, indicates a location of the physical space. The management node may allocate the physical space to each global address after creating the memory pool, or may allocate the physical space to a global address corresponding to a data write request when receiving the data write request. For example, the foregoing Plog client applies to the storage node for a segment of global address (logical address space), where the global address points to a plurality of storage nodes 20 (for example, 20a to 20c), and may be used to implement memory multi-copy storage. A correspondence between each global address and a physical address of the global address is recorded in an index table, and the management node synchronizes the index table to each storage node 20. Each storage node 20 stores the index table, so that a physical address corresponding to a global address is queried based on the index table when data is subsequently read or written.

Similarly, to ensure reliability of data in the memory, an EC mechanism or a multi-copy mechanism is also used, to implement data redundancy in the memory pool. Principles of the EC mechanism and the multi-copy mechanism of the memory are not described herein again. Compared with conventional EC and multi-copy, usually, memory EC and memory multi-copy are mainly used in a small IO (less than 2 KB) scenario. A minimum IO may be 64 B. For example, in a memory EC solution or a memory multi-copy solution, after receiving a write request, the storage node 20 may directly write data into the memory like the DRAM or the SCM. In a possible implementation, EC and multi-copy implemented based on a single-side RDMA network can greatly reduce an end-to-end latency. It should be noted that in addition to the EC scenario and the multi-copy scenario, this application is also applicable to another scenario in which data needs to be sent. Embodiments of this application are also not limited to an RDMA transmission scenario. The method in embodiments of this application may also be applied to a write request that is based on another network protocol, provided that there is a network interface card device and the network interface card can generate a plurality of queues. The RDMA write request in embodiments of this application is merely used as an example for ease of understanding the solution by a reader.

In practice, regardless of the multi-copy scenario or the EC scenario, during data sending, required data, required addresses, and required context information need to be prepared for a plurality of copies or slices first, data and context information that are to be sent to a plurality of nodes are assembled to generate a plurality of WQEs, and the WQEs are placed into corresponding QPs (which are SQs herein). Then, the data is sent to a plurality of storage nodes 20. Operation processes (which are referred to as encode_and_send processes in embodiments of this application) of performing assembling to generate the WQEs and placing the WQEs into the QPs are performed at an operating system layer in a computing node 10 in series. In other words, a CPU needs to sequentially perform a plurality of encode_and_send processes, so that the data and the write address that are to be sent to the plurality of nodes can be placed into the SQ queues in an RDMA network interface card. For example, in a three-copy scenario, a processor 101 of the computing node 10 needs to perform the following steps.
(1) Perform assembling to generate a WQE: Assemble data, an address, and context information of a copy 1 to generate a WQE 1.
(2) Place the WQE into a QP: Send the WQE 1 to a network interface card and place the WQE 1 into a corresponding queue QP 1.
(3) The copy 1 is returned successfully.
(4) Perform assembling to generate a WQE: Assemble data, an address, and context information of a copy 2 to generate a WQE 2.
(5) Place the WQE into a QP: Send the WQE 2 to the network interface card and place the WQE 2 into a corresponding queue QP 3.
(6) The copy 2 is returned successfully.
(7) Perform assembling to generate a WQE: Assemble data, an address, and context information of a copy 3 to generate a WQE 3.
(8) Place the WQE into a QP: Send the WQE 3 to the network interface card and place the WQE 3 into a corresponding queue QP 3.
(9) The copy 3 is returned successfully.

It can be learned that, a larger quantity of slices or copies indicates higher latency overheads. Especially, in a small IO (for example, 64 B) scenario (for example, memory multi-copy and memory EC), proportions of latencies of the encode_and_send processes in the multi-copy scenario and the EC scenario are larger. The latency proportion in the multi-copy scenario may be 25%, and the latency proportion in the EC scenario may be more than 35%. If a multithreading concurrency operation or a coroutine concurrency operation is started at the operating system layer, CPU latency overheads caused by the operation are higher than those of the current encode_and_send processes.

In view of the foregoing problem, embodiments of this application provide a data sending method, which may be applied to the storage system in FIG. 1 or FIG. 2, to effectively reduce data sending latencies in an EC scenario and a multi-copy scenario. According to the method, the foregoing operation processes of performing assembling to generate WQEs and placing the WQEs into QPs may be offloaded to a network interface card for concurrent execution, so that a CPU scheduling latency can be effectively reduced.

Embodiments of this application provide a specific embodiment to describe an overall scenario.

First, a computing node 10 receives an EC or multi-copy IO write request. The request carries to-be-written data and a virtual address. The virtual address represents an address segment, and corresponds to a segment of logical space in a storage system. The virtual address is visible to an application 103. The IO write request may be generated by the application 103 of the computing node, or may be sent by another storage node or client server. This is not limited in this application.

In a possible implementation, the storage system uses LUN (logical unit number, logical unit number) semantics for communication. The address segment may be identified by three factors: an LUN ID, an LBA (logical block address, logical block address), and a length (length). The three factors may represent a determined address segment, to index a global address.

In another possible implementation, the storage system uses memory semantics for communication. For example, space of a DRAM is mapped to the application of the computing node 10 or another client server, so that the computing node 100 can sense the space (referred to as virtual space in this embodiment) of the DRAM and access the virtual space. In this scenario, an address carried in to-be-read/written data sent by the computing node 10 to a storage node 20 may include a virtual space ID, and a start address and a length of the virtual space, which are used to represent an address segment.

The foregoing descriptions are merely used as an example, and a specific representation manner of a write address is not limited in this application.

Then, the computing node 10 needs to perform splitting based on storage space corresponding to the foregoing virtual address, and prepare the write address. The write address is used to write EC and multi-copy data to different storage nodes. In a possible implementation, a client 104 of the computing node receives the foregoing EC or multi-copy IO write request, and completes preparation of the data and the write address.

Specifically, in the storage system, a distributed hash table (Distributed Hash Table, DHT) manner is usually used for routing. According to the distributed hash table manner, a target partition in a DHT is obtained based on the foregoing virtual address, a node is determined based on the target partition (where it is assumed that the node is the computing node 10), and then a storage unit S is determined based on the node. The storage unit S is actually a segment of logical space, and actual physical space still is from a plurality of storage nodes 20. For example, the storage unit S is a set including a plurality of logical blocks, and different logical blocks may be corresponding to physical blocks on different storage nodes. In this case, for a distributed storage system that supports Plog write, the computing node 10 may index, by using the Plog client 104 in the DHT manner again, Plogs on a plurality of physical storage nodes corresponding to the storage unit. The Plog write is used as an example, and the write address may include: (a) an offset (offset), for example, an offset of writing data into a hard disk or an SCM; (2) a Plog ID, indicating an identifier of a segment of Plog space, and corresponding to encapsulation of a segment of byte-level address space that supports appending; and (c) a size, to be specific, a size of written data. Therefore, each time data with a specific size is written, the data with the size is added to the current offset (offset) of the disk. For example, after writing the data successfully, the PLOG sets a current written size to offset+size.

In addition, the computing node 10 further needs to be responsible for preparing slice data or multi-copy data. In embodiments of this application, a processor 101 of the computing node does not assemble a WQE, but directly sends the prepared write address and the prepared data to a network interface card 102.

Finally, the network interface card 102 splits the data and the write address that are in a first message, then assembles the data and the address with a context to generate a plurality of WQEs in parallel, places the WQEs into send queues QPs, and sends the WQEs to a plurality of storage nodes in a storage node cluster by using an RDMA request. Each storage node completes data writing.

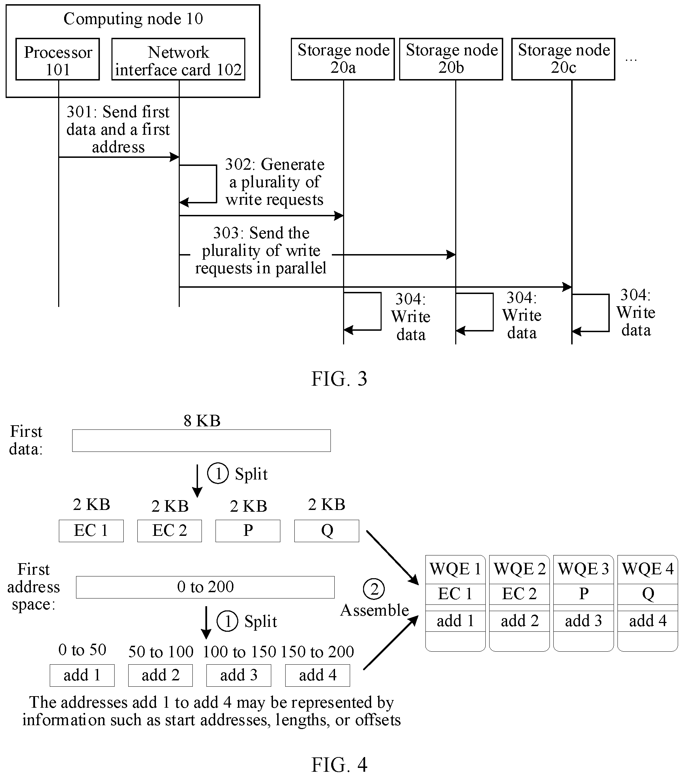

To further explain the method provided in embodiments of this application, and in particular, content performed by the network interface card, the following describes a schematic flowchart of a data sending method provided in FIG. 3. The method includes step 301 to step 304.

Step 301: A network interface card 102 receives first data and a first address that are sent by a processor 101.

The first data and the first address may be data and a write address that are prepared by the processor 101 of a computing node 10 for a multi-copy scenario and an EC scenario. A client 104 needs to first prepare the first data and the write address. Then, the processor 101 sends the first data and the write address to the network interface card 102, in other words, the network interface card obtains the first data and the first address from the processor 101. In an optional manner, the network interface card 102 may alternatively directly obtain the first data and the first address from a memory of the computing node 10.
(1) First data: For example, in an EC 2+2 scenario, the first data is data including two data slices and two check data slices. The first data may be prepared by the client 104. Specifically, two consecutive data slices are divided into one EC group, and the EC group is calculated by using an erasure coding technology, to generate two check data slices, or a corresponding slice may be supplemented based on a requirement. For another example, in a three-copy scenario, the client 104 copies data, and prepares three pieces of copy data.
(2) The first address is the foregoing write address, and may be used to write data into storage devices in different storage nodes. In addition to the foregoing described Plog write address (for example, the offset, the Plog ID, and the size), the write address may further be a logical address LBA and a length (length). The storage node (for example, 20a) may deliver the data to a hard disk based on the address, and then a translation layer in the hard disk makes the LBA be corresponding to a specific physical address, to complete data writing.

Optionally, the write address may further include a stripe ID, a node ID, an offset offset, and a length length. The stripe ID indicates a stripe to which a data write request belongs. The node ID indicates a storage node of the stripe. The offset indicates an offset of a write location relative to a start location of the stripe, that is, indicates that data is written from the start location of the stripe. The length indicates a size of the to-be-written data.

The foregoing descriptions are merely used as an example to facilitate understanding of a reader. This application does not impose any limitation on a form of the write address.

It should be noted that the first address may directly include a plurality of write addresses, which may be directly obtained by the network interface card 102 by extracting from the obtained message or simply splitting the first address. Optionally, the first address may alternatively include an entire segment of write address.

Step 302: The network interface card 102 generates a plurality of write requests.

For example, the network interface card 102 generates P RDMA write requests based on the first data and the first address, where each of the P RDMA write requests carries to-be-written data and a corresponding write address, and P is a positive integer greater than 2.

It should be noted that the network interface card 102 may be a smart network interface card (smart NIC), and a processor 106 in the network interface card 102 may be a multi-core central processing unit (central processing unit, CPU), an application-specific integrated circuit (application-specific integrated circuit, ASIC), a field programmable gate array (field programmable gate array, FPGA), or the like, for example, may be ASIC (application-specific integrated circuit) chips of a plurality of CPU cores, to implement multi-core concurrent scheduling. In a possible implementation, the processor 106 is a dedicated offloading processor in the network interface card, and has almost no scheduling latency.

Specifically, an EC scenario is used as an example. First, the network interface card 102 receives the first data and the first address that are sent by the processor 101. Then, the network interface card 102 concurrently schedules a plurality of threads by using a plurality of cores of the processor 106, and splits and assembles the first data and the first address, to generate P RDMA write requests (that is, WQEs) in parallel. Each RDMA request carries copy data or slice data, and a write address required for storing data in different storage nodes.

When the obtained first data directly includes P pieces of to-be-written data, the network interface card 102 may directly extract the P pieces of to-be-written data from the received message or simply split the received message to obtain the P pieces of to-be-written data (as shown in FIG. 4). The network interface card splits the first data into the P pieces of to-be-written data, where the P pieces of to-be-written data include n data slices and m check slices corresponding to the n data slices, m and n are positive integers, and P=n+m. For example, when the first data (8 KB) is simply split in FIG. 4, two slices EC 1 and EC 2 of 2 KB and two check slices P and Q may be obtained.

Optionally, when the first address may alternatively include a segment of write address, the network interface card 102 performs specific calculation and processing to split the first address into a plurality of available write addresses.

Similarly, when the obtained first data directly includes P write addresses, the network interface card 102 may directly extract the P write addresses from the first data or simply split the first data to obtain the P write addresses (as shown in FIG. 4). In FIG. 4, the processor 101 of the network interface card simply splits storage space (where it is assumed that the storage space is 0 to 100) corresponding to the first address, to obtain four pieces of storage space add 1 and add 2, and write addresses that are corresponding to the storage space are represented by using a specific rule. Each of the four write addresses is corresponding to a segment of storage space in different storage nodes.

A specific form of the write address has been described above, for example, content such as the stripe ID, the node ID, the offset offset, and the length length.

Optionally, when the first data has only a part of data, the network interface card 102 can obtain a plurality of pieces of data only after performing specific calculation and processing. For example, in the three-copy scenario, the network interface card copies the first data to obtain the P pieces of to-be-written data, or splits the first data into the P pieces of to-be-written data, where the P pieces of to-be-written data are P pieces of identical copy data. The first data may have only one piece of copy data. In this case, the network interface card 102 can generate three copies only after copying the data to obtain other two pieces of data.

After obtaining the P pieces of to-be-written data and the P write addresses, the network interface card 102 assembles the data and the addresses into P RDMA write requests. Each RDMA write request carries one of the P pieces of to-be-written data and one of the corresponding P write addresses.

Step 303: The network interface card 102 sends the plurality of write requests to a plurality of storage nodes in parallel.

For example, the network interface card 102 places the P RDMA write requests into P send queues QPs, where the P RDMA write requests are in one-to-one correspondence with the P QPs; then sends the P RDMA write requests to P storage nodes based on the P QPs, where write addresses in the P RDMA write requests are in one-to-one correspondence with the P storage nodes; and finally sends the P RDMA write requests to the storage nodes via a network.

Specifically, a calculation module that concurrently schedules the network interface card respectively submits the foregoing plurality of WQEs (to be specific, the P RDMA write requests) to send queues SQs. The SQ is used by the computing node to send a work request to the storage node, and an RQ is used by the storage node to receive the work request sent by the computing node. Each SQ on each computing node is associated with an RQ of a data receiving end, so that the storage node 20 and the computing node 10 can communicate with each other by using a queue pair.

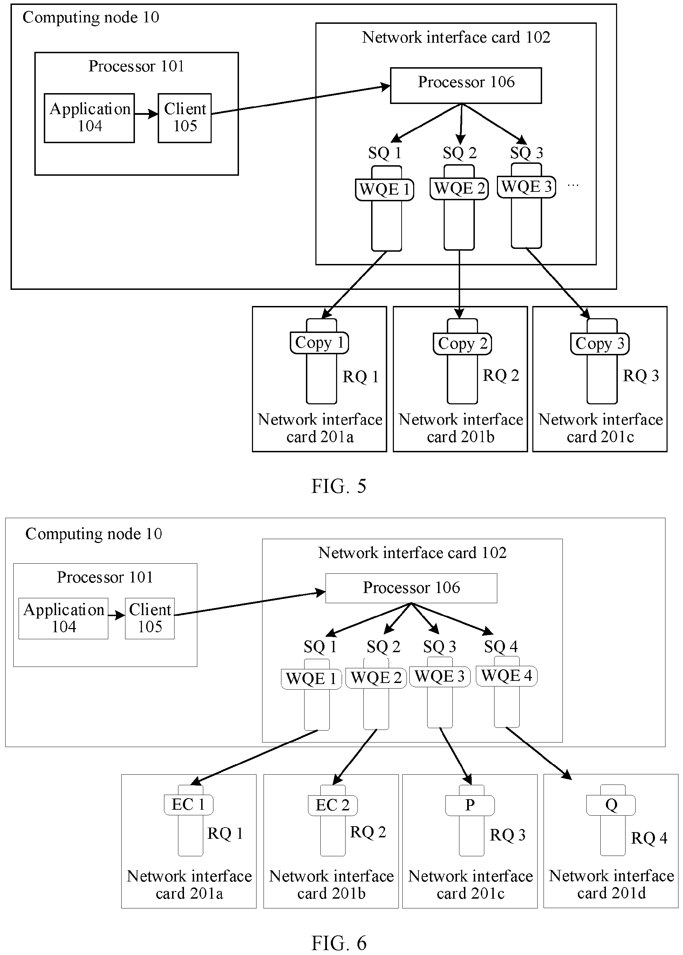

FIG. 4 and FIG. 5 are schematic diagrams of a data sending method in a three-copy scenario and an EC 4+2 scenario according to embodiments of this application.

In the three-copy scenario shown in FIG. 4, after the network interface card 102 receives the first data and the first address that are sent by the processor 101, a dedicated scheduling engine in the processor 106 performs concurrent operations: assembling content such as copies 1 to 3 included in the first data and corresponding write addresses to concurrently generate three work requests WQEs (for example, RDMA write requests), and respectively placing the three work requests into send queues SQ 1, SQ 2, and SQ 3. Each WQE carries one piece of to-be-written copy data and a corresponding write address (namely, the first address). In a possible implementation, the first data may carry only one piece of copy data, and after obtaining the data, the network interface card 102 needs to copy the data, to obtain other two pieces of copy data.

FIG. 4 shows the EC 2+2 scenario. After the network interface card 102 receives the first data and the first address that are sent by the processor 101, a dedicated scheduling engine in the processor 106 performs concurrent operations: first, assembling content such as data slices 1 and 2 and check slices P and Q that are included in the first data and corresponding write addresses to concurrently generate four work requests WQEs (for example, RDMA write requests), and respectively placing the four work requests into send queues SQ 1, SQ 2, SQ 3, and SQ 4. Each WQE carries a to-be-written data slice or check slice and a corresponding write address.

In this embodiment of this application, the processor 106 may invoke computer-executable instructions stored in the network interface card 102, so that the network interface card 102 can perform the operations performed by the network interface card 102 in the embodiment shown in FIG. 2.

Step 304: Write data into the plurality of storage nodes.

Specifically, after receiving the write requests sent by the network interface card 102, the plurality of storage nodes (for example, 20a to 20d) store the data based on the data and the write addresses that are carried in the write requests.

For example, in the three-copy scenario shown in FIG. 5, storage nodes 20a to 20c receive RDMA write requests via respective network interface cards (201a to 201c). For example, the network interface card 201a has a receive queue RQ 1, and the received write request is placed into the queue. The write request carries data and a write address of a copy 1, and the storage node 20a stores the copy data in a storage device 203 of the storage node 20a. For example, in a memory three-copy scenario, after receiving data, the network interface card 201a may directly write the data into a DRAM or an SCM. Cases of the storage nodes 20b and 20c are similar to that of the storage node 20a. Details are not described herein again. The network interface cards of the storage nodes 20b and 20c respectively receive data of a copy 2 and a copy 3, and write the data into respective storage devices.

For another example, in the EC 2+2 scenario shown in FIG. 6, storage nodes 20a to 20d receive RDMA write requests via network interface cards. The network interface cards 201a to 201d respectively have receive queues RQ 1 to RQ 4, and the received write requests are placed into the corresponding queues. For example, the write request received by the network interface card 201a carries a data slice EC 1 and a write address, and the write request received by the network interface card 201c carries a check slice P and a write address. The storage nodes 20a and 20c respectively store the data slice EC 1 and the check slice P into storage devices 203 of the storage nodes 20a and 20c. Cases of the storage nodes 20b and 20d are similar. Details are not described herein again. The network interface cards of the storage nodes 20b and 20d respectively receive data of a data slice EC 2 and a check slice Q, and write the data into respective storage devices.

In a possible implementation, the first address in the write request may be an address in memories of the storage nodes 20a to 20c. This is a memory three-copy scenario or a memory EC scenario. For example, the memory may be an SCM, and the SCM may perform addressing by using bytes. The network interface card of the storage node 20 may directly write a copy or a slice into the memory based on the write address. In this scenario, according to the method in embodiments of this application, a latency of an encode_and_send process can be greatly shortened, and processing efficiency in the EC scenario and the three-copy scenario can be improved.

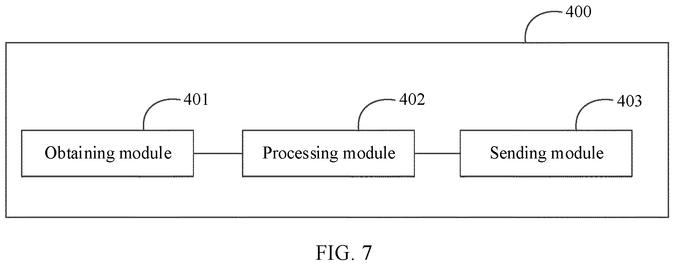

Based on a same invention concept as method embodiments, an embodiment of this application further provides a data sending apparatus. The data sending apparatus may be deployed on a network interface card of a computer system or a service node (for example, a computing node 10 or a storage node 20), and is configured to perform the method performed by the network interface card 102 in the method embodiments shown in FIG. 3 to FIG. 6. For related features, refer to the foregoing method embodiments. Details are not described herein again. As shown in FIG. 7, the apparatus 400 includes an obtaining module 401, a processing module 402, and a sending module 403.

Specifically, the obtaining module 401 is configured to obtain first data and a first address. Optionally, the obtaining module 401 is further configured to: obtain the first data and the first address from a processor of a host, where the network interface card is located in the host; or directly obtain the first data and the first address from a memory of a host. The host herein may be the computing node 10.

The processing module 402 is configured to generate P write requests based on the first data and the first address, where each of the P write requests carries to-be-written data and a corresponding write address, and P is a positive integer greater than 2. The processing module is further configured to place the P write requests into P send queues QPs, where the P write requests are in one-to-one correspondence with the P QPs.

Optionally, the processing module 402 is further configured to: copy the first data to obtain P pieces of to-be-written data; or split the first data into P pieces of to-be-written data, where the P pieces of to-be-written data are P pieces of identical data.

Optionally, the processing module 402 is further configured to split the first data into P pieces of to-be-written data, where the P pieces of to-be-written data include n data slices and m check slices corresponding to the n data slices, m and n are positive integers, and P=n+m.

Optionally, the processing module 402 is further configured to: split the first address into P write addresses, where the first address represents a segment of storage space, and each of the P write addresses is corresponding to a segment of storage space on one of the P storage nodes; and assemble the P pieces of to-be-written data and the P write addresses into the P write requests, where each write request carries one of the P pieces of to-be-written data and one of the corresponding P write addresses.

The sending module 403 is configured to send the P write requests to P storage nodes based on the P QPs, where the write addresses in the P write requests are in one-to-one correspondence with the P storage nodes.

Optionally, the write request is an RDMA write request, and the P write addresses are respectively corresponding to memory storage space of all of the P storage nodes.

This application further provides a chip. The chip includes a processor and a communication interface. The communication interface is configured to communicate with the processor of a device in which the chip is located. The processor may be in an implementation form of the processor 106. The processor of the chip is configured to implement a function of operation steps of the method performed by the network interface card 102 in the computing node 10 in embodiments of this application. For brevity, details are not described herein again.

Optionally, the chip may alternatively be an offload card other than the network interface card 102 in the computing node 10 shown in FIG. 1 and FIG. 2. The offload card is configured to perform the data sending method in embodiments of this application. Details are not described herein again.

This application further provides a network interface card. A structure of the network interface card is similar to the network interface card 102 shown in FIG. 5 and FIG. 6. The network interface card includes a processor 102, configured to implement functions of operation steps of the method performed by the network interface card 102 of the computing node in the method in embodiments of this application. Details are not described herein again. The network interface card, the processor (for example, a CPU), and a memory may form a data device together. The data device is, for example, a mobile terminal, a personal computer, or a server.

All or some of the foregoing embodiments may be implemented by software, hardware, firmware, or any other combination. When software is used to implement the foregoing embodiments, all or some of the foregoing embodiments may be implemented in a form of a computer program product. The computer program product includes one or more computer instructions. When the computer program instructions are loaded or executed on a computer, the procedures or the functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that the computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that, a person skilled in the art can make various modifications and variations to this application without departing from the scope of this application. In this way, this application is intended to cover these modifications and variations of this application provided that they fall within the scope of the claims of this application and their equivalent technologies.

## Claims

1. A data sending method, wherein the method is applied to a network interface card, and the method comprises:
obtaining first data and a first address;
generating P write requests based on the first data and the first address, wherein each of the P write requests carries to-be-written data and a corresponding write address, and P is a positive integer greater than 2;
placing the P write requests into P send queues QPs, wherein the P write requests are in one-to-one correspondence with the P QPs; and
sending the P write requests to P storage nodes based on the P QPs, wherein the write addresses in the P write requests are in one-to-one correspondence with the P storage nodes.

2. The method according to claim 1, wherein the method further comprises:
copying the first data to obtain P pieces of to-be-written data; or splitting the first data into P pieces of to-be-written data, wherein the P pieces of to-be-written data are P pieces of identical data.

3. The method according to claim 1, wherein the method further comprises:
splitting the first data into P pieces of to-be-written data, wherein the P pieces of to-be-written data comprise n data slices and m check slices corresponding to the n data slices, m and n are positive integers, and P=n+m.

4. The method according to claim 2 or 3, wherein the method further comprises:
splitting the first address into P write addresses, wherein the first address represents a segment of storage space, and each of the P write addresses is corresponding to a segment of storage space on one of the P storage nodes; and
assembling the P pieces of to-be-written data and the P write addresses into the P write requests, wherein each write request carries one of the P pieces of to-be-written data and one of the corresponding P write addresses.

5. The method according to any one of claims 1 to 4, wherein the write request is an RDMA write request, and the P write addresses are respectively corresponding to memory storage space of all of the P storage nodes.

6. The method according to any one of claims 1 to 5, wherein the obtaining first data and a first address comprises:
obtaining, by the network interface card, the first data and the first address from a processor of a host, wherein the network interface card is located in the host; or
directly obtaining, by the network interface card, the first data and the first address from a memory of a host.

7. A data sending apparatus, wherein the apparatus is used in a network interface card, and the apparatus comprises:
an obtaining module, configured to obtain first data and a first address;
a processing module, configured to generate P write requests based on the first data and the first address, wherein each of the P write requests carries to-be-written data and a corresponding write address, and P is a positive integer greater than 2, wherein
the processing module is further configured to place the P write requests into P send queues QPs, wherein the P write requests are in one-to-one correspondence with the P QPs; and
a sending module, configured to send the P write requests to P storage nodes based on the P QPs, wherein the write addresses in the P write requests are in one-to-one correspondence with the P storage nodes.

8. The apparatus according to claim 7, wherein the processing module is further configured to:
copy the first data to obtain P pieces of to-be-written data; or split the first data into P pieces of to-be-written data, wherein the P pieces of to-be-written data are P pieces of identical data.

9. The apparatus according to claim 7, wherein the processing module is further configured to:
split the first data into P pieces of to-be-written data, wherein the P pieces of to-be-written data comprise n data slices and m check slices corresponding to the n data slices, m and n are positive integers, and P=n+m.

10. The apparatus according to claim 8 or 9, wherein the processing module is further configured to:
split the first address into P write addresses, wherein the first address represents a segment of storage space, and each of the P write addresses is corresponding to a segment of storage space on one of the P storage nodes; and
assemble the P pieces of to-be-written data and the P write addresses into the P write requests, wherein each write request carries one of the P pieces of to-be-written data and one of the corresponding P write addresses.

11. The apparatus according to any one of claims 7 to 10, wherein the write request is an RDMA write request, and the P write addresses are respectively corresponding to memory storage space of all of the P storage nodes.

12. The apparatus according to any one of claims 7 to 11, wherein the obtaining module is further configured to:
obtain the first data and the first address from a processor of a host, wherein the network interface card is located in the host; or
directly obtain the first data and the first address from a memory of a host.

13. A network interface card, wherein the network interface card comprises a processor and a storage device, the storage device stores computer instructions, and the processor executes the computer instructions to implement the method according to any one of claims 1 to 6.

14. A computing device, wherein the computing device comprises a network interface card and a processor, the processor is configured to generate first data and a first address, and the network interface card is configured to perform the method according to any one of claims 1 to 6.

15. A computer-readable medium, wherein the computer-readable medium stores a computer program, and when the computer program is run on a computer, the computer is enabled to implement the method according to any one of claims 1 to 6.
